# EUROPÄISCHE PATENTSCHRIFT

(11) **EP 2 829 038 B1**
(45) Veröffentlichungstag und Bekanntmachung des Hinweises auf die Patenterteilung: **02.03.2016**
(21) Anmeldenummer: 13723447.2
(22) Anmeldetag: 03.05.2013
(51) Int. Cl.: H04L 29/06, G06F 21/50, G06F 21/12

(54) **VERFAHREN ZUM SCHUTZ EINES COMPUTERPROGRAMMPRODUKTS, COMPUTERPROGRAMMPRODUKT UND COMPUTERLESBARES SPEICHERMEDIUM**
METHOD FOR PROTECTING A COMPUTER PROGRAM PRODUCT, COMPUTER PROGRAM PRODUCT AND COMPUTER-READABLE STORAGE MEDIUM
PROCÉDÉ DE PROTECTION D'UN PRODUIT-PROGRAMME D'ORDINATEUR, PRODUIT-PROGRAMME D'ORDINATEUR ET SUPPORT D'ENREGISTREMENT LISIBLE PAR ORDINATEUR

(30) Priorität: 25.06.2012 DE 102012210747
(43) Veröffentlichungstag der Anmeldung: 28.01.2015
(73) Patentinhaber: Siemens Aktiengesellschaft, 80333 München (DE)
(72) Erfinder: BARTHOLDT, Jörg, 81737 München (DE); DIPPL, Sebastian, 80538 München (DE)
(86) Internationale Anmeldenummer: PCT/EP2013/059213
(87) Internationale Veröffentlichungsnummer: WO 2014/000927

(56) Entgegenhaltungen:
- EP-A2- 2 273 411
- US-A1- 2007 027 815

## Beschreibung

### GEBIET DER ERFINDUNG

Die vorliegende Erfindung bezieht sich auf ein Verfahren zum Schutz eines Computerprogrammprodukts, ein entsprechendes Computerprogrammprodukt und ein computerlesbares Speichermedium.

### TECHNISCHER HINTERGRUND

Durch die unrechtmäßige Verwendung nicht lizensierter Software gehen den Softwareherstellern jedes Jahr große Geldbeträge verloren. Der Schutz von Computerprogrammen vor nicht erlaubter Benutzung ist daher ein wichtiges technisches Problem in der Softwareentwicklung.

Bekannte Verfahren zum Schutz von Computerprogrammen vor unberechtigter Benutzung sehen z.B. eine Hardwarevorrichtung, z.B. einen sog. Dongle, vor, welche dazu dient, ein Computerprogramm vor einem unberechtigten Ausführen zu schützen. Beispielsweise kann das Dongle ein Speicher sein, welcher einen Lizenzschlüssel speichert. Dieser Lizenzschlüssel kann dann von dem jeweiligen Computerprogramm z.B. beim Starten des Computerprogramms aus dem Speicher ausgelesen und überprüft werden.

Es ist auch bekannt, dass ein solches Dongle z.B. dazu ausgebildet ist, kryptographische Funktionen auszuführen. Beispielsweise kann ein solches Dongle in Kombination mit einem jeweiligen Computerprogramm ein sog. "challenge-response" Verfahren durchführen.

Die Verwendung eines Dongles erfordert allerdings die Dongle-Hardware und einen Zugang zu einem Anschluss des jeweiligen Computers.

Daher werden auch in Software implementierte Schutzverfahren zum Schutz von Computerprogrammen eingesetzt. Solche Verfahren basieren üblicherweise darauf, Kenndaten des Computersystems zu überwachen, auf welchem das jeweilige Computerprogramm ausgeführt wird.

Beispielsweise kann ein Computerprogramm bei dessen Installation die Kennung des Prozessors, die sog. CPU-ID, des Computers speichern, auf welchem das Computerprogramm installiert wird. Anschließend kann das Computerprogramm bei jedem Systemstart überprüfen, ob der Prozessor des Computers, auf welchem das Computerprogramm ausgeführt wird, der Prozessor ist, welchen das Computerprogramm bei der Installation erkannt hat. Weitere Kenndaten des Computers, welche eine Identifikation ermöglichen, sind ebenfalls möglich.

Weiterer Stand der Technik ist US2007/0027815.

Die Verwendung von Kenndaten desjenigen Computersystems, auf welchem ein Computerprogramm ausgeführt wird, ist allerdings dann problematisch, wenn das Computerprogramm in einer "Virtuellen Maschine" also einem virtuellen Computersystem ausgeführt wird. Eine solche virtuelle Maschine erlaubt es, die möglichen Kenndaten zu manipulieren bzw. Vorzugeben. Ferner kann ein Abbild einer virtuellen Maschine nach der Installation des Computerprogramms sehr einfach kopiert werden.

### ZUSAMMENFASSUNG DER ERFINDUNG

Es ist daher eine Aufgabe der vorliegenden Erfindung, einen verbesserten Schutz von Computerprogrammprodukten bereitzustellen.

Diese Aufgabe wird erfindungsgemäß durch die Merkmale der unabhängigen Ansprüche gelöst.

Demgemäß ist vorgesehen:
- ein Verfahren zum Schutz eines Computerprogrammprodukts, welches insbesondere in einer virtuellen Betriebsumgebung betrieben wird, mit den Schritten Erfassen mindestens eines außerhalb einer Betriebsumgebung definierten Betriebsparameters der Betriebsumgebung, in welcher das Computerprogrammprodukt ausgeführt wird, Vergleichen der erfassten Betriebsparameter mit einem für den jeweiligen Betriebsparameter gespeicherten Vergleichswert, und Ausgeben eines Warnsignals, falls eine Anzahl an Vergleichsergebnissen, welche ein Ausführen des Computerprogrammprodukts in einer anderen Betriebsumgebung als derjenigen, in welcher die Vergleichswerte aufgenommen wurden, kennzeichnen, einen vorgegebenen Schwellwert überschreitet.
- ein Computerprogrammprodukt aufweisend Computerinstruktionen zum Ausführen eines erfindungsgemäßen Verfahrens.
- ein Computerlesbares Speichermedium aufweisend ein erfindungsgemäßes Computerprogrammprodukt.

Die der vorliegenden Erfindung zu Grunde liegende Erkenntnis besteht darin, dass mit Hilfe virtueller Betriebsumgebungen Betriebsparameter der jeweiligen Betriebsumgebung nahezu beliebig manipuliert werden können.

Die der vorliegenden Erfindung zu Grunde liegende Idee besteht nun darin, dieser Erkenntnis Rechnung zu tragen und eine Möglichkeit vorzusehen, dennoch zu erkennen, ob ein Computerprogrammprodukt in derjenigen Betriebsumgebung betrieben wird, in welcher es z.B. ursprünglich installiert wurde.

Dazu sieht die vorliegende Erfindung vor, dass mindestens ein Betriebsparameter, welcher außerhalb der Betriebsumgebung definiert wird, erfasst wird. Diese erfassten Betriebsparameter werden daraufhin mit für die jeweiligen Betriebsparameter erfassten Vergleichswerten verglichen.

Die gespeicherten Betriebsparameter können beispielsweise bei der Installation des Computerprogrammprodukts innerhalb der jeweiligen Betriebsumgebung gespeichert werden.

Für jeden Betriebsparameter kennzeichnet der Vergleich mit den gespeicherten Betriebsparametern, ob ein Computerprogrammprodukt in derjenigen Betriebsumgebung betrieben wird, in welcher die gespeicherten Betriebsparameter erfasst wurden, oder, ob das entsprechende Computerprogrammprodukt in einer anderen Betriebsumgebung als derjenigen Betriebsumgebung betrieben wird, in welcher die gespeicherten Betriebsparameter erfasst wurden.

Übersteigt die Anzahl der Vergleiche, die darauf hindeuten, dass das entsprechende Computerprogrammprodukt in einer anderen Betriebsumgebung als derjenigen Betriebsumgebung betrieben wird, in welcher die gespeicherten Betriebsparameter erfasst wurden, einen Schwellwert, wird ein Warnsignal ausgegeben.

Die vorliegende Erfindung ermöglicht es daher den Betrieb eines Computerprogrammproduktes insbesondere auch dann zu überwachen, wenn dieses in einer virtualisierten Betriebsumgebung betrieben wird.

Vorteilhafte Ausführungsformen und Weiterbildungen ergeben sich aus den Unteransprüchen sowie aus der Beschreibung unter Bezugnahme auf die Figuren.

In einer Ausführungsform weist der mindestens eine außerhalb einer Betriebsumgebung definierte Betriebsparameter eine Subnetzmaske und/oder vorgegebene Adressen von vorgegebenen Systemen eines mit der Betriebsumgebung gekoppelten Datennetzwerks auf. Die Subnetzmaske ist üblicherweise eine feststehende Größe in einem Datennetzwerk. Daher weist eine Veränderung der Subnetzmaske auf einen möglichen Umzug des Computerprogrammproduktes auf eine neue Betriebsumgebung hin.

In einer Ausführungsform weist der mindestens eine außerhalb einer Betriebsumgebung definierte Betriebsparameter eine DNS-Server Adresse auf. Die Adresse des DNS-Servers ist ebenso wie die Subnetzmaske in einem Datennetzwerk üblicherweise konstant und kann daher effektiv zur Erkennung eines Umzugs des Computerprogrammprodukts beitragen.

In einer Ausführungsform weist der mindestens eine außerhalb einer Betriebsumgebung definierte Betriebsparameter durch das Computerprogrammprodukt erreichbare Nachbarsysteme in dem Datennetzwerk auf. In Datennetzwerken von z.B. Firmen werden häufig fest installierte Computersysteme eingesetzt. Daher kann eine Veränderung in den durch das Computerprogramm erreichbaren Nachbarsystemen ebenfalls auf einen Umzug des Computerprogrammprodukts in eine andere Betriebsumgebung hindeuten.

In einer Ausführungsform weist der mindestens eine außerhalb einer Betriebsumgebung definierte Betriebsparameter durch das Computerprogrammprodukt erreichbare SNMP-Geräte auf. Eine Veränderung in den durch das Computerprogramm erreichbaren SNMP-Geräten deutet ebenfalls auf einen Umzug des Computerprogrammprodukts in eine andere Betriebsumgebung hin.

In einer Ausführungsform weist der mindestens eine außerhalb einer Betriebsumgebung definierte Betriebsparameter zumindest einen Teil einer Netzwerkroute zu bekannten Internetservern auf. Sendet ein Computerprogramm eine Anfrage an einen Internetserver, so durchläuft diese Anfrage üblicherweise ein internes Netzwerk einer Firma oder eines Internetproviders, bis die Anfrage in das eigentliche Internet eingespeist wird. Daher kann eine Veränderung zumindest des internen Teils der Netzwerkroute auf einen Umzug des Computerprogramms in eine neue Betriebsumgebung hindeuten.

In einer Ausführungsform weist der mindestens eine außerhalb einer Betriebsumgebung definierte Betriebsparameter eine Datenübertragungszeit, auch PING-Zeit genannt, zu bekannten Internetservern auf. Die Datenübertragungszeit ist zwar keine Konstante, aber bei einer Anfrage zu einem bekannten Server bewegt sich die Datenübertragungszeit üblicherweise innerhalb eines gewissen Schwankungsbereichs. Daher kann eine drastische Abweichung der Datenübertragungszeit von einem bekannten Wert für die Datenübertragungszeit ebenfalls auf einen Umzug des Computerprogrammprodukts in eine neue Betriebsumgebung hindeuten.

In einer Ausführungsform wird beim Vergleichen der jeweilige Betriebsparameter mit einem definierten Vergleichswert und/oder mit einem Wertebereich und/oder mit einem booleschen Wert verglichen. Dies ermöglicht es, für jeden Betriebsparameter geeignete Vergleichsoptionen bereitzustellen. So können beispielsweise Adressen wie die Subnetzmaske oder die Adresse des DNS-Servers mit einem gespeicherten Adresswert verglichen werden. Bei dem Abgleich der Datenübertragungszeit kann z.B. überprüft werden, ob die Datenübertragungszeit in einem Datenübertragungszeit-Intervall liegt. Dieses Intervall kann z.B. aus den entsprechenden vergangenen Datenübertragungszeiten gebildet werden.

In einer Ausführungsform wird jedem der Betriebsparameter eine Gewichtung zugewiesen und wird die Anzahl an Vergleichen mittels einer basierend auf der zugewiesenen Gewichtung berechneten gewichteten Summe berechnet. Dadurch wird es möglich, bestimmten Parametern eine höhere Priorität bei der Bestimmung eines Umzugs zuzuweisen.

In einer Ausführungsform wird zusätzlich zu dem Ausgeben des Warnsignals ein Starten des Computerprogrammprodukts verhindert. Dies ermöglicht einen effektiven Kopierschutz.

In einer Ausführungsform wird zusätzlich zu dem Ausgeben des Warnsignals ein Lizenzschlüssel abgefragt. Dies ermöglicht es, trotz des Erkennens eines Umzugs des Computerprogrammproduktes eine erneute Aktivierung des Computerprogrammproduktes zu ermöglichen.

In einer Ausführungsform ist das Computerprogrammprodukt als Bibliothek und/oder als Programmmodul eines weiteren Computerprogrammprodukts ausgebildet. Dies ermöglicht es, das Computerprogrammprodukt z.B. als Kopierschutzmechanismus in weitere Computerprogrammprodukte zu integrieren. In solch einer Ausführungsform verhindert das erfindungsgemäße Computerprogrammprodukt z.B. auch das Ausführen der weiteren Computerprogrammprodukte.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNGEN

Die vorliegende Erfindung wird nachfolgend anhand der in den schematischen Figuren der Zeichnungen angegebenen Ausführungsbeispiele näher erläutert. Es zeigen dabei:
- Fig. 1: ein Ablaufdiagramm einer Ausführungsform des erfindungsgemäßen Verfahrens;
- Fig. 2: zwei Tabellen mit Ausführungsformen erfindungsgemäßer Netzwerkrouten zu dem Server wikipedia.de;
- Fig. 3: eine Darstellung einer Ausführungsform mehrerer erfindungsgemäßer Betriebsparameter;
- Fig. 4: ein Blockdiagramm einer möglichen Betriebsumgebung einer Ausführungsform eines erfindungsgemäßen Computerprogrammprodukts.

In allen Figuren sind gleiche bzw. funktionsgleiche Elemente und Vorrichtungen - sofern nichts Anderes angegeben ist - mit denselben Bezugszeichen versehen worden.

### BESCHREIBUNG VON AUSFÜHRUNGSBEISPIELEN

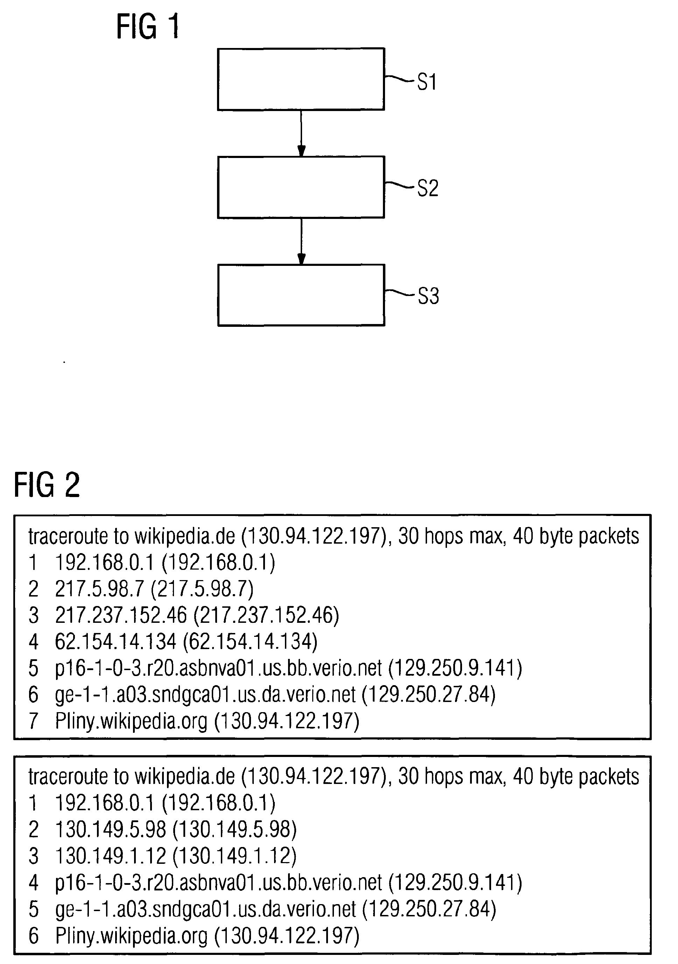

Fig. 1 zeigt ein Ablaufdiagramm einer Ausführungsform des erfindungsgemäßen Verfahrens.

In einem ersten Schritt S1 wird mindestens ein außerhalb einer Betriebsumgebung 2, 3 definierter Betriebsparameter 15-1 - 15-5 der Betriebsumgebung 2, 3, in welcher das Computerprogrammprodukt 1 ausgeführt wird, erfasst.

Ferner sieht ein zweiter Schritt S2 das Vergleichen S2 der erfassten Betriebsparameter 15-1 - 15-5 mit einem für den jeweiligen Betriebsparameter 15-1 - 15-5 gespeicherten Vergleichswert vor. Dabei stellen die gespeicherten Vergleichswerte Werte für die Betriebsparameter 15-1 - 15-5 solche Werte dar, die in derjenigen Betriebsumgebung 2, 3 erfasst und gespeichert werden, in welcher das Computerprogrammprodukt 1 ursprünglich installiert wurde oder für welcher das Computerprogrammprodukt ursprünglich lizensiert wurde.

Schließlich wird in einem dritten Schritt S3 ein Warnsignal 17 ausgegeben, falls eine Anzahl an Vergleichsergebnissen, welche ein Ausführen des Computerprogrammprodukts 1 in einer anderen Betriebsumgebung 2, 3 kennzeichnen, einen vorgegebenen Schwellwert überschreitet. In einer Ausführungsform kann auch das Ausführen des erfindungsgemäßen Computerprogrammprodukts 1 verhindert werden. Dabei bedeutet das Ausführen in einer anderen Betriebsumgebung 2, 3 das Ausführen des Computerprogrammprodukts 1 in einer Betriebsumgebung 2, 3, in welcher das Computerprogrammprodukt 1 nicht ursprünglich installiert wurde und/oder für welche die Vergleichswerte nicht gespeichert wurden.

Ein erfindungsgemäßes Verfahren kann auch als Computerprogrammprodukt 1 ausgeführt sein, welches als Modul eines weiteren Computerprogrammproduktes die Ausführung des weiteren Computerprogrammproduktes überwacht und steuert.

In einer Ausführungsform ist vorgesehen, dass bei Erkennen eines Umzugs der Betriebsumgebung 2, 3 ein Lizenzschlüssel für das Computerprogrammprodukt 1 abgefragt wird, der eine erneute Aktivierung des Computerprogrammproduktes ermöglicht.

In computerbasierten Betriebsumgebungen, also z.B. Datennetzwerken und Rechenzentren, kann sich die Betriebsumgebung eines Computerprogrammproduktes in gewissen Maßen ändern. Die vorliegende Erfindung sieht daher vor, Betriebsparameter 15-1 - 15-5 der Betriebsumgebung 2, 3 derart auszuwählen, dass eine Veränderung der Betriebsparameter 15-1 - 15-5 einen möglichst sicheren Rückschluss darauf lässt, ob das Computerprogrammprodukt 1 in derjenigen Betriebsumgebung 2, 3 ausgeführt wird, in welcher es ursprünglich installiert wurde oder nicht. Dabei kann die Genauigkeit der Erkennung über die Anzahl der verwendeten Betriebsparameter 15-1 - 15-5 und eine Anpassung des vorgegebenen Schwellwertes angepasst werden.

Dabei können die außerhalb einer Betriebsumgebung 2, 3 definierten Betriebsparameter 15-1 - 15-5 unterschiedliche, insbesondere über Netzwerkschnittstellen erfassbare Betriebsparameter 15-1 - 15-5 sein.

Mögliche Betriebsparameter sind dabei:
- eine Subnetzmaske;
- vorgegebene Adressen von vorgegebenen Systemen (z.B. Drucker, oder dergleichen) in dem Datennetzwerk 4;
- eine DNS-Server Adresse;
- eine Adresse eines Standardgateways;
- erreichbare Nachbarsysteme 5, 6 in dem Datennetzwerk 4;
- erreichbare SNMP-Geräte;
- zumindest einen Teil einer Netzwerkroute zu bekannten Internetservern 7;
- eine Datenübertragungszeit zu bekannten Internetservern 7;
- Ursprungsadressen von sog. ARP-Requests.

Für diese Vielzahl an Betriebsparametern 15-1 - 15-5 können für das Vergleichen S2 der jeweilige Betriebsparameter 15-1 - 15-5 definierte Vergleichswerte und/oder Wertebereiche und/oder boolesche Werte vorgegeben werden.

Beispielsweise können für Netzwerkadressen definierte Vergleichswerte gespeichert werden. Für eine Datenübertragungszeit ist es vorteilhaft einen Wertebereich zu speichern, da diese auch von der momentanen Lastsituation des Datennetzwerks 4 und der Lastsituation des Internets oder des angerufenen Internetservers 7 abhängig ist. In einer Ausführungsform können für Änderungen einzelner Betriebsparameter 15-1 - 15-5 auch Toleranzbereiche, Schwellen oder Varianzen angegeben werden.

Schließlich kann der Schwellwert in Abhängigkeit von der Gewünschten Erkennungsrate eingestellt werden. Dabei wird eine Abwägung dazwischen getroffen, wie schnell ein Umzug erkannt werden soll und wie oft Fehlerkennungen toleriert werden können.

In einer Ausführungsform wird jedem der Betriebsparameter 15-1 - 15-5 eine Gewichtung zugewiesen. Ferner wird die Anzahl an Vergleichen mittels einer basierend auf der jeweils zugewiesenen Gewichtung berechneten gewichteten Summe berechnet. Dadurch kann eine weitere Anpassung des vorliegenden Verfahrens an unterschiedliche Rahmenbedingungen erfolgen.

Fig. 2 zeigt zwei Tabellen mit Ausführungsformen erfindungsgemäßer Netzwerkrouten zu dem Server wikipedia.de. Die Tabellen wurden mit dem Programm "traceroute" aufgenommen, welches die Route von dem ausführenden Computer zu dem Zielsystem erfasst und ausgibt.

Es ist in Fig. 2 zu erkennen, dass die Tabelleneinträge 2, 3 und 4 der zwei in Fig. 2 dargestellten Tabellen nicht identisch sind. Dies bedeutet, dass nach dem privaten Netzwerk, dem Subnetzwerk in welchem die Betriebsumgebung 2, 3 des Computerprogrammprodukts 1 angeordnet ist, unterschiedliche Computersysteme die Anfrage weiterleiten, bis diese bei Eintrag 5 (obere Tabelle) und Eintrag 4 (untere Tabelle) auf einer gemeinsamen Route weiterläuft.

Insbesondere Unterschiede in den ersten Systemen nach dem Subnetzwerk 4, in welchem die Betriebsumgebung 2, 3 des Computerprogrammprodukts 1 angeordnet ist, deuten auf einen Umzug der Betriebsumgebung 2, 3 hin.

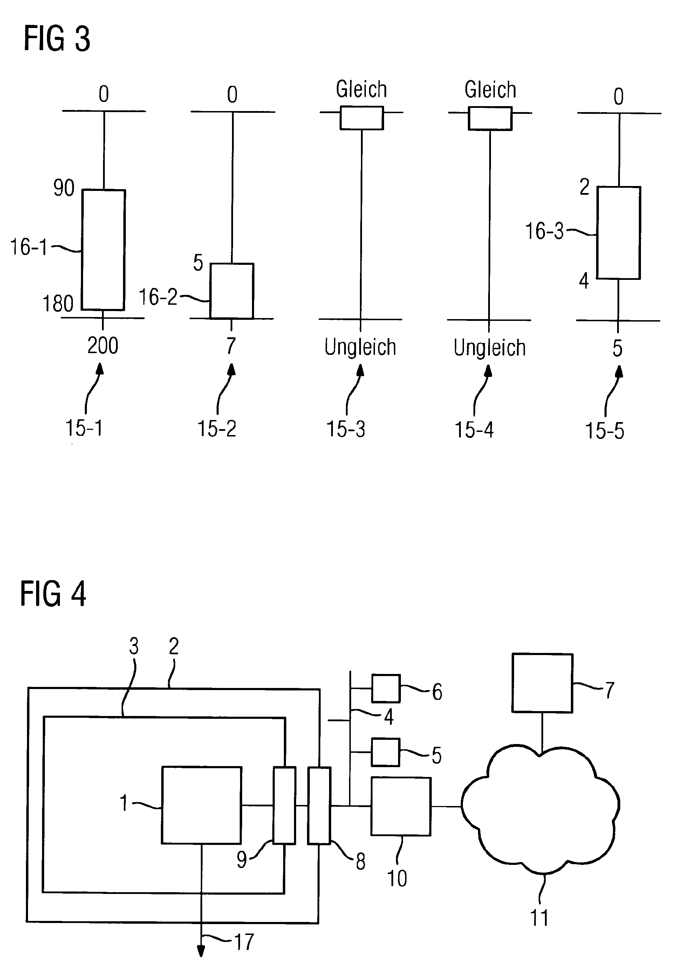

Fig. 3 zeigt eine Darstellung einer Ausführungsform mehrerer erfindungsgemäßer Betriebsparameter 15-1 - 15-5.

Dabei stellt der Betriebsparameter 15-1 die Ping-Zeit zu einem Google-Server dar. Der Betriebsparameter 15-2 stellt die Anzahl der Übereinstimmungen bei einem Traceroute-Durchlauf dar. Der Betriebsparameter 15-3 stellt einen Vergleich der eigenen IP-Adresse dar. Der Betriebsparameter 15-4 stellt eine Ursprungsadresse von ARP-Anfragen dar. Der Betriebsparameter 15-5 stellt die Anzahl an Nachbarsystemen in dem Datennetzwerk 4 dar, die per UDP-Protokoll auf bestimmten Port-Nummern erreichbar sind.

Für den Betriebsparameter 15-1 ist ein Intervall zwischen 90ms und 180ms angegeben. Liegt eine Ping-Zeit zu einem Google-Server also zwischen 90ms und 180ms wird nicht von einem Umzug ausgegangen.

Für den Betriebsparameter 15-2 ist ein Intervall zwischen 5 und 7 angegeben. Liegt die Anzahl der Übereinstimmungen bei einem Tracerout-Durchlauf unter 5 wird also von einem Umzug ausgegangen.

Für die Betriebsparameter 15-3 und 15-4 wird verglichen, ob diese den gespeicherten Werten gleichen.

Schließlich ist für den Betriebsparameter 15-5 ein Intervall zwischen 2 und 4 angegeben.

In weiteren Ausführungsformen kann eine unterschiedliche Anzahl von Betriebsparametern 15-1 - 15-5 in den Satz von Betriebsparametern 15-1 - 15-5 aufgenommen werden. Ferner können abweichende Vergleichswerte, Intervalle oder dergleichen angegeben werden.

Fig. 4 zeigt ein Blockdiagramm einer möglichen Betriebsumgebung 2, 3 einer Ausführungsform eines erfindungsgemäßen Computerprogrammprodukts 1.

In Fig. 4 ist eine Betriebsumgebung 2 mit einer Netzwerkschnittstelle 8 dargestellt, die z.B. ein Computerserver sein kann. Innerhalb der Betriebsumgebung 2 ist eine virtuelle Betriebsumgebung 3 mit einer virtuellen Netzwerkschnittstelle 9 dargestellt. Die virtuelle Betriebsumgebung 3 kann z.B. ein virtueller PC sein, der als ein Computerprogramm auf dem Server 2 ausgeführt wird. In dem virtuellen PC 3 ist das erfindungsgemäße Computerprogrammprodukt 1 installiert, welches dazu ausgebildet ist über die virtuelle Netzwerkschnittstelle 9 zu kommunizieren, welche mit der realen Netzwerkschnittstelle 8 des Computerservers 2 gekoppelt ist.

Die realen Netzwerkschnittstelle 8 ist mit einem Datennetzwerk 4 gekoppelt, welches zwei weitere Computersysteme 5 und 6 aufweist, die mit dem Datennetzwerk 4 gekoppelt sind. Das Datennetzwerk 4 ist ferner mit einem Standardgateway 10 gekoppelt, welches dazu ausgebildet ist, das Datennetzwerk 4 mit dem Internet 11 zu koppeln. Schließlich ist ein Internet-server 7, z.B. der Server von wikipedia.de, mit dem Internet gekoppelt.

Wird das erfindungsgemäße Verfahren bzw. das erfindungsgemäße Computerprogrammprodukt 1 in der dargestellten Betriebsumgebung 2 ausgeführt, können z.B. die weiteren Computersysteme 5 und 6 erkannt und gespeichert werden. Ferner kann die Adresse des Standardgateways 10 gespeichert werden. Weiterhin können die Route und die Ping-Zeit zu dem wikipedia.de Server 7 gespeichert werden.

Würde die virtuelle Betriebsumgebung 3 in einen anderen Computerserver 3 eines anderen Computernetzwerks umgezogen, würden sich die oben genannten Parameter mit sehr hoher Wahrscheinlichkeit verändern und der Umzug könnte detektiert werden.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

## Patentansprüche

1. Verfahren zum Schutz eines Computerprogrammprodukts (1), welches in einer Betriebsumgebung (2), insbesondere in einer virtuellen Betriebsumgebung (3), betrieben wird, mit den Schritten:
Erfassen (S1) mindestens eines außerhalb einer Betriebsumgebung (2, 3) definierten Betriebsparameters (15-1 - 15-5) der Betriebsumgebung (2, 3), in welcher das Computerprogrammprodukt (1) ausgeführt wird;
Vergleichen (S2) der erfassten Betriebsparameter (15-1 - 15-5) mit einem für den jeweiligen Betriebsparameter (15-1 - 15-5) gespeicherten Vergleichswert;
Ausgeben (S3) eines Warnsignals (17), falls eine Anzahl an Vergleichsergebnissen, welche ein Ausführen des Computerprogrammprodukts (1) in einer anderen Betriebsumgebung (2, 3) als derjenigen, in welcher die Vergleichswerte aufgenommen wurden, kennzeichnen, einen vorgegebenen Schwellwert überschreitet.

2. Verfahren nach Anspruch 1,
wobei der mindestens eine außerhalb einer Betriebsumgebung (2, 3) definierte Betriebsparameter (15-1 - 15-5) eine Subnetzmaske und/oder vorgegebene Adressen von vorgegebenen Systemen eines mit der Betriebsumgebung (2, 3) gekoppelten Datennetzwerks (4) aufweist.

3. Verfahren nach einem der vorherigen Ansprüche,
wobei der mindestens eine außerhalb einer Betriebsumgebung (2, 3) definierte Betriebsparameter (15-1 - 15-5) eine DNS-Server Adresse und/oder eine Adresse eines Standardgateways aufweist.

4. Verfahren nach einem der vorherigen Ansprüche,
wobei der mindestens eine außerhalb einer Betriebsumgebung (2, 3) definierte Betriebsparameter (15-1 - 15-5) durch das Computerprogrammprodukt (1) erreichbare Nachbarsysteme (5, 6) in dem Datennetzwerk (4) aufweist.

5. Verfahren nach einem der vorherigen Ansprüche,
wobei der mindestens eine außerhalb einer Betriebsumgebung (2, 3) definierte Betriebsparameter (15-1 - 15-5) durch das Computerprogrammprodukt (1) erreichbare SNMP-Geräte aufweist.

6. Verfahren nach einem der vorherigen Ansprüche,
wobei der mindestens eine außerhalb einer Betriebsumgebung (2, 3) definierte Betriebsparameter (15-1 - 15-5) zumindest einen Teil einer Netzwerkroute zu bekannten Internetservern (7) aufweist.

7. Verfahren nach einem der vorherigen Ansprüche,
wobei der mindestens eine außerhalb einer Betriebsumgebung (2, 3) definierte Betriebsparameter (15-1 - 15-5) eine Datenübertragungszeit zu mindestens einem bekannten Internetserver (7) aufweist.

8. Verfahren nach einem der vorherigen Ansprüche,
wobei beim Vergleichen (S2) der jeweilige Betriebsparameter (15-1 - 15-5) mit einem definierten Vergleichswert und/oder mit einem Wertebereich und/oder mit einem booleschen Wert verglichen wird.

9. Verfahren nach einem der vorherigen Ansprüche,
wobei jedem der Betriebsparameter (15-1 - 15-5) eine Gewichtung zugewiesen wird und die Anzahl an Vergleichen mittels einer basierend auf der zugewiesenen Gewichtung berechneten gewichteten Summe berechnet wird.

10. Verfahren nach einem der vorherigen Ansprüche,
wobei zusätzlich zu dem Ausgeben des Warnsignals (17) ein Starten des Computerprogrammprodukts (1) verhindert wird.

11. Verfahren nach einem der vorherigen Ansprüche,
wobei zusätzlich zu dem Ausgeben des Warnsignals (17) ein Lizenzschlüssel abgefragt wird.

12. Computerprogrammprodukt (1),
aufweisend Computerinstruktionen zum Ausführen eines Verfahrens nach einem der vorherigen Ansprüche.

13. Computerprogrammprodukt (1) nach Anspruch 12,
wobei das Computerprogrammprodukt (1) als Bibliothek und/oder als Programmmodul eines weiteren Computerprogrammprodukts ausgebildet ist.

14. Computerlesbares Speichermedium, aufweisend:
ein Computerprogrammprodukt (1) nach einem der Ansprüche 12 und 13.

## Claims

1. Method for protecting a computer program product (1) which is operated in an operating environment (2), in particular in a virtual operating environment (3), having the steps of:
recording (S1) at least one operating parameter (15-1 - 15-5), which is defined outside an operating environment (2, 3), for the operating environment (2, 3) in which the computer program product (1) is executed;
comparing (S2) the recorded operating parameters (15-1 - 15-5) with a comparison value stored for the respective operating parameter (15-1 - 15-5);
outputting (S3) a warning signal (17) if a number of comparison results, which indicate execution of the computer program product (1) in an operating environment (2, 3) other than that in which the comparison values were recorded, exceeds a predefined threshold value.

2. Method according to Claim 1,
the at least one operating parameter (15-1 - 15-5) defined outside an operating environment (2, 3) having a subnet mask and/or predefined addresses of predefined systems of a data network (4) coupled to the operating environment (2, 3).

3. Method according to one of the preceding claims,
the at least one operating parameter (15-1 - 15-5) defined outside an operating environment (2, 3) having a DNS server address and/or an address of a standard gateway.

4. Method according to one of the preceding claims,
the at least one operating parameter (15-1 - 15-5) defined outside an operating environment (2, 3) having neighboring systems (5, 6) which can be reached by the computer program product (1) in the data network (4).

5. Method according to one of the preceding claims,
the at least one operating parameter (15-1 - 15-5) defined outside an operating environment (2, 3) having SNMP devices which can be reached by the computer program product (1).

6. Method according to one of the preceding claims,
the at least one operating parameter (15-1 - 15-5) defined outside an operating environment (2, 3) having at least part of a network route to known Internet servers (7).

7. Method according to one of the preceding claims,
the at least one operating parameter (15-1 - 15-5) defined outside an operating environment (2, 3) having a data transmission time to at least one known Internet server (7).

8. Method according to one of the preceding claims,
the respective operating parameter (15-1 - 15-5) being compared with a defined comparison value and/or with a range of values and/or with a Boolean value during comparison (S2).

9. Method according to one of the preceding claims,
each of the operating parameters (15-1 - 15-5) being allocated a weighting, and the number of comparisons being calculated using a weighted sum calculated on the basis of the allocated weighting.

10. Method according to one of the preceding claims,
starting of the computer program product (1) being prevented in addition to the warning signal (17) being output.

11. Method according to one of the preceding claims,
a license key being queried in addition to the warning signal (17) being output.

12. Computer program product (1),
having computer instructions for carrying out a method according to one of the preceding claims.

13. Computer program product (1) according to Claim 12,
the computer program product (1) being in the form of a library and/or a program module of a further computer program product.

14. Computer-readable storage medium having:
a computer program product (1) according to either of Claims 12 and 13.

## Revendications

1. Procédé de protection d'un produit-programme d'ordinateur (1), fonctionnant dans un environnement opérationnel (2), et plus particulièrement dans un environnement opérationnel virtuel (3), comportant les étapes suivantes :
détection (S1) d'au moins un paramètre opérationnel (15-1 - 15-5), défini en dehors d'un environnement opérationnel (2, 3), de l'environnement opérationnel (2, 3) dans lequel le produit-programme d'ordinateur (1) est exécuté ;
comparaison (S2) des paramètres opérationnels détectés (15-1 - 15-5) avec une valeur de référence stockée pour le paramètre opérationnel respectif (15-1 - 15-5) ;
émission (S3) d'un signal d'avertissement (17) si un nombre de résultats de comparaison caractérisant une exécution du produit-programme d'ordinateur (1) dans un environnement opérationnel (2, 3) autre que celui dans lequel les valeurs de référence ont été enregistrées dépasse une valeur seuil donnée.

2. Procédé selon la revendication 1, l'au moins un paramètre opérationnel (15-1 - 15-5) défini en dehors d'un environnement opérationnel (2, 3) comportant un masque de sous-réseau et/ou des adresses données de systèmes donnés d'un réseau de données (4) couplé à l'environnement opérationnel (2, 3).

3. Procédé selon l'une des revendications précédentes, l'au moins un paramètre opérationnel (15-1 - 15-5) défini en dehors d'un environnement opérationnel (2, 3) comportant une adresse de serveur DNS et/ou une adresse d'une passerelle standard.

4. Procédé selon l'une des revendications précédentes, l'au moins un paramètre opérationnel (15-1 - 15-5) défini en dehors d'un environnement opérationnel (2, 3) comportant des systèmes voisins (5, 6) joignables par le produit-programme d'ordinateur (1) dans le réseau de données (4).

5. Procédé selon l'une des revendications précédentes, l'au moins un paramètre opérationnel (15-1 - 15-5) défini en dehors d'un environnement opérationnel (2, 3) comportant des appareils SNMP joignables par le produit-programme d'ordinateur (1).

6. Procédé selon l'une des revendications précédentes, l'au moins un paramètre opérationnel (15-1 - 15-5) défini en dehors d'un environnement opérationnel (2, 3) comportant au moins une partie d'une route de réseau vers des serveurs internet connus (7).

7. Procédé selon l'une des revendications précédentes, l'au moins un paramètre opérationnel (15-1 - 15-5) défini en dehors d'un environnement opérationnel (2, 3) présentant un temps de transmission de données vers au moins un serveur internet connu (7).

8. Procédé selon l'une des revendications précédentes, le paramètre opérationnel respectif (15-1 - 15-5) étant, lors de la comparaison (S2), comparé avec une valeur de référence définie et/ou avec une plage de valeurs et/ou avec une valeur booléenne.

9. Procédé selon l'une des revendications précédentes, à chacun des paramètres opérationnels (15-1 - 15-5) étant affectée une pondération et le nombre de comparaisons étant calculé au moyen d'une somme pondérée calculée sur la base de la pondération affectée.

10. Procédé selon l'une des revendications précédentes, un démarrage du produit-programme d'ordinateur (1) étant empêché en plus de l'émission du signal d'avertissement (17).

11. Procédé selon l'une des revendications précédentes, une clé de licence étant interrogée en plus de l'émission du signal d'avertissement (17).

12. Produit-programme d'ordinateur (1), comportant des instructions d'ordinateur pour l'exécution d'un procédé selon l'une des revendications précédentes.

13. Produit-programme d'ordinateur (1) selon la revendication 12, le produit-programme d'ordinateur (1) se présentant sous la forme d'une bibliothèque et/ou d'un module de programme d'un autre produit-programme d'ordinateur.

14. Support d'enregistrement lisible par ordinateur, comportant un produit-programme d'ordinateur (1) selon l'une des revendications 12 et 13.
